# EUROPÄISCHE PATENTSCHRIFT

(11) **EP 0 885 110 B1**
(45) Veröffentlichungstag und Bekanntmachung des Hinweises auf die Patenterteilung: **05.06.2002**
(21) Anmeldenummer: 97901015.4
(22) Anmeldetag: 13.01.1997
(51) Int. Cl.: B29C 53/08

(54) **VERFAHREN UND VORRICHTUNG ZUM BIEGEN EINES BAUTEILS AUS EINEM THERMOPLASTISCHEN KUNSTSTOFF UND BAUTEIL SELBST**
PROCESS AND DEVICE FOR BENDING A THERMOPLASTIC COMPONENT AND THE COMPONENT ITSELF
PROCEDE ET DISPOSITIF POUR CINTRER UN COMPOSANT EN MATIERE THERMOPLASTIQUE, ET LE COMPOSANT LUI-MEME

(30) Priorität: 24.02.1996 DE 19607068
(43) Veröffentlichungstag der Anmeldung: 23.12.1998
(73) Patentinhaber: Braun GmbH, Kronberg (DE)
(72) Erfinder: KASTL, Hans, D-61462 Königstein (DE); SCHENK, Ulrich, D-61440 Oberursel (DE); JOHNE, Karlheinz, D-65207 Wiesbaden (DE); MAJTHAN, Rudolf, D-65760 Eschborn (DE)
(86) Internationale Anmeldenummer: EP9700128
(87) Internationale Veröffentlichungsnummer: WO9730835

(56) Entgegenhaltungen:
- WO-A-93/11730
- DE-A- 3 322 716
- FR-A- 2 639 534
- US-A- 2 290 102
- US-A- 2 316 700
- US-A- 5 100 319

## Beschreibung

Die Erfindung betrifft ein Verfahren und eine Vorrichtung zum Biegen eines Bauteils aus einem thermoplastischen Kunststoff, insbesondere eines hülsenförmigen Bauteils für ein Gerät des persönlichen Bedarfs, wie beispielsweise ein Zahnpflegegerät, oder ähnliches, durch Erwärmung des Bauteils bis zur Erweichungstemperatur des Kunststoffs.

Zur Herstellung großer Stückzahlen von Kunststoffbauteilen werden üblicherweise Kunststoff-Spritzgießverfahren angewandt. Diese ermöglichen eine relativ einfache und kostengünstige Herstellung von geometrisch einfach ausgeführten Bauteilen. Die Erzeugung geometrisch aufwendiger Bauteile mit beispielsweise mehreren Öffnungen, Hinterschneidungen oder kleinsten Abmessungen wird mittels der bekannten Spritzgießverfahren jedoch schwierig, bzw. nicht praktikabel oder unwirtschaftlich. Als Alternative zur Herstellung dieser geometrisch aufwendig geformten Kunststoffteile bietet sich an, diese Bauteile aus mehreren Einzelteilen, welche separat gespritzt wurden, zu montieren. Da dieser Weg der Herstellung jedoch sehr aufwendig und, insbesondere für große Stückzahlen, kostenintensiv ist, sucht man für die Herstellung von beispielsweise gebogenen hülsenförmigen Kunststoffteilen eine Alternative zu dem mehrstufigen Herstellungsverfahren.

Aus dem Stand der Technik sind Verfahren und Vorrichtungen zum Herstellen, insbesondere zum Biegen eines Kunststoff-Bauteils bekannt. So offenbart die EP 0 464 345 A2 ein Verfahren und eine Vorrichtung zum Verformen von rohrförmigen Werkstücken aus thermoplastischen Kunststoffen in einer Form durch Wärmeeinwirkung. Dieses Verfahren zeichnet sich dadurch aus, daß die zum Verformen notwendige Wärmemenge nur dem zu verformenden Werkstück von innen zugeführt wird und das Werkstück dabei bis zur Erweichungstemperatur des Kunststoffs erwärmt wird. Diese Temperatur wird solange gehalten, bis das Werkstück die durch eine Form vorgegebene Gestalt annimmt und anschließend verbleibt das Werkstück solange in der Form bis es abgekühlt ist.

Aus der WO 93/11730 A ist bereits ein Bauteil bestehend aus einem thermoplastischen Kunststoff mit einem hohlzylindrischen Körper mit einem Schaft bekannt, wobei der Schaft über einen mittleren Bereich in eine kegelstumpfförmige Spitze übergeht und der Schaft einen größeren Durchmesser aufweist als der mittlere Bereich.

Gemäß dem einleitenden Teil des Anspruchs 1 ist aus der US 2,290,102 ein Verfahren zur Herstellung von gebogenen, aus thermoplastischem Material bestehenden Trinkhalmen bekannt. Der zunächst umgebogene Trinkhalm wird mittels eines Förderbandes an einer Wärmequelle vorbeitransportiert und knickt dann aufgrund der Schwerkraft ab, bis der abgeknickte Abschnitt auf einem weiteren, winklig zum ersten Förderband angeordneten zweiten Förderband zu liegen kommt.

Die Aufgabe der vorliegenden Erfindung ist es, ein Verfahren und eine Vorrichtung zur Umformung, insbesondere zum Biegen eines Bauteils aus einem thermoplastischen Kunststoff, insbesondere eines hülsenförmigen Bauteils für ein Gerät des persönlichen Bedarfs, wie beispielsweise ein Zahnpflegegerät oder ähnliches, unter Erwärmung des Bauteils anzugeben. Das anzugebende Verfahren sowie die Vorrichtung sollen kostengünstig durchführbar sein, damit diese insbesondere für die Herstellung von Produkten in größter Stückzahl geeignet sind.

Die Erfindung löst diese Aufgabe dadurch, daß sie ein Verfahren zum Biegen eines Bauteils aus einem thermoplastischen Kunststoff, durch Erwärmung des Bauteils bis zur Erweichungstemperatur des Kunststoffs angibt. Dabei wird erfindungsgemäß das Bauteil an einer Formschiene zur Anlage gebracht und während einer Relativbewegung zwischen dem Bauteil und der Formschiene mittels eines Biegewerkzeuges an der Formschiene gebogen, wobei sich die Anlagefläche zwischen dem Bauteil und der Formschiene während des Biegevorgangs ändert. Durch den erfindungsgemäßen Biegevorgang eines hülsenförmigen Bauteils - nachfolgend auch Hülse genannt - an einer Formschiene, wird vorteilhafterweise ein Verfahren angegeben, welches die ansonsten üblichen Toleranzprobleme bei beispielsweise Gesenkbiegeverfahren vermeidet. Die Hülse wird an der Formschiene zur Anlage gebracht und nur an dieser geführt, während ein weiteres Werkzeug, nämlich ein Biegewerkzeug die anfangs gerade Hülse an der Formschiene biegt. Da sich die Anlagefläche zwischen dem zu biegenden Bauteil und der Formschiene ändert, insbesondere durch Ausbildung des Profils einer Biegekante der Formschiene, kann das Bauteil vorteilhafterweise in die verschiedenartigsten Endformen gebogen werden. Damit das Bauteil an der Anlagefläche der Schiene gebogen werden kann, wird dieses durch eine Relativbewegung zu der Formschiene bewegt. Vorteilhafterweise findet diese Bewegung des Bauteils relativ zur stationären Formschiene statt. Selbstverständlich ist jedoch auch eine Bewegung der Formschiene relativ zu einem stationären Bauteil denkbar. Weiterhin ermöglicht dieses Biegeverfahren an einer Formschiene eine Anordnung der zu biegenden Hülsen unmittelbar neben-, bzw. hintereinander, wodurch vorteilhafterweise ein kontinuierlicher Biegebetrieb und somit ein äußerst wirtschaftliches Biegeverfahren ermöglicht wird.

In einer Ausgestaltung der Erfindung wird das zu biegende Bauteil im wesentlichen senkrecht zur Formschiene angeordnet. Dabei sind jeweils die beiden Hauptachsen des Bauteils und der Formschiene so angeordnet, daß sich diese kreuzen. Dadurch wird vorteilhafterweise eine optimale Anlagefläche der Hülse an der Biegekante der Formschiene erreicht, wobei die Hülse problemlos an ihrem freien unteren Schaft gehalten, bzw. geführt werden kann.

In einer besonderen Ausbildung der Erfindung bringt man das Bauteil in eine linienförmige Anlage zur Biegekante der Formschiene und parallel zur Hauptachse des Bauteils. Hierdurch wird vorteilhafterweise eine größtmögliche Anlagefläche zwischen der Hülse und der Schiene erreicht, welche auch eine optimale Wärmeübertragung von der beheizten Schiene zur Hülse garantiert. Somit ist die zu biegende Hülse permanent in optimalem Kontakt zur geheizten Formschiene.

Das zu biegende Bauteil, bzw. die Hülse wird mittels eines Halte- und Transportmittels im wesentlichen parallel zur Formschiene bewegt. Somit ist die Halte- und Transportfunktion des Bauteil vorteilhafterweise in einem Gegenstand realisiert, welcher eine Führung der Hülse in einem definierten parallelen Abstand zur Formschiene ermöglicht.

Die Hülse wird mittels des Halte- und Transportmittels mit im wesentlichen konstanter Geschwindigkeit relativ zur Formschiene bewegt. Somit ist ein gleichmäßiger Transport der Hülse entlang der Schiene und ein kontinuierlicher Transport- sowie Biegevorgang ermöglicht.

Die Position des Biegewerkzeugs zur Führungsschiene, insbesondere zu einem Anfangsbzw. Endbereich der Führungsschiene wird während des Verfahrens geändert. So ist eine zu der Formschiene im wesentlichen parallel angeordnete zweite Führungsschiene vorgesehen. Diese zweite Führungsschiene weist eine Anlagefläche auf, die zu der Anlagefläche der Formschiene korrespondierend ausgebildet ist, so daß das zu biegende Bauteil in einem Kanal zwischen den beiden Schienen geführt und gebogen wird. Dieser Kanal ist beispielsweise im Anfangsbereich der Schienen gerade und im Endbereich bogenförmig ausgebildet.

In einer besonderen Ausführung der Erfindung wird vorgeschlagen, daß man das Biegewerkzeug relativ zur Schiene mit dem Bauteil mit bewegt. Dies stellt eine vorteilhafte Alternative zu der oben genannten Ausbildung der zwei Führungsschienen dar. Es versteht sich von selbst, daß man die Bewegungen des Biegewerkzeugs zu der Bewegung des Transportmittels, welches die Hülse transportiert, synchronisiert. Somit ist jedem Bauteil ein einzelnes Biegewerkzeug zugeordnet, welches vorteilhafterweise dem individuellen Biegezustand des Bauteils nachgeführt werden kann.

In einer weiteren Ausbildung der Erfindung wird das Biegewerkzeug in einer Ebene bewegt, welche im wesentlichen senkrecht zur Schienenlängsachse angeordnet ist. Diese Bewegung kann der oben beschriebenen Bewegung des Biegewerkzeugs relativ zur Schiene überlagert sein. Dadurch kann zu jedem Zeitpunkt des Biegevorgangs eine erforderlichee Anpassung der Position des Biegewerkzeugs an die Position der Hülse erreicht werden.

Die Bewegung des Biegewerkzeugs selbst kann dabei eine gerade - oder auch eine Kreisbogen-Bewegung sein. Die jeweils angemesse Bewegungsform wird in Abhängigkeit von der Geometrie des zu formenden Bauteils, sowie von den konstruktiven Möglichkeiten des Biegewerkzeugs bestimmt.

Es wird weiter vorgeschlagen, die Bewegung der Biegewerkzeuge kontinuierlich auszuführen. Diese ermöglicht vorteilhafterweise einen gleichmäßigen Biegevorgang der Hülse an der Formkante der Schiene. Es ist selbstverständlich auch denkbar die Bewegung der Werkzeuge diskontinuierlich, beispielsweise getaktet durchzuführen, wenn dies die Ausgestaltung des Profils der Biegeschiene, bzw. das zu biegende Bauteil erforderlich macht.

In einer vorteilhaften Ausgestaltung der Erfindung wird das zu biegende Bauteil an einer stationären Heizeinrichtung vorbeibewegt. Eine solche Heizeinrichtung kann beispielsweise ein Warm- oder Heißluftgebläse sein, welches über eine Schlitzdüse oder auch über einzelne Heizdüsen die Warmluft auf das zu biegende Teil richtet.

Alternativ zu der obigen Ausführung ist auch denkbar, die Heizeinrichtung relativ zu einer stationären Schiene mit dem Bauteil mitzubewegen. Damit wird vorteilhafterweise eine äußerst gezielte und gleichmäßige Erwärmung der zu biegenden Bauteile erreicht.

Es wird weiterhin vorgeschlagen, das Bauteile nur partiell, insbesondere an der Biegestelle zu erwärmen. Dies ist besonders vorteilhaft, wenn die an die Biegestelle angrenzenden Bereiche des Bauteils, bzw. der Hülse nicht verformt werden sollen oder verformt werden dürfen. Dies ist insbesondere dann der Fall, wenn in den angrenzenden Bereichen konstruktiv bedingte Bauteiltoleranzen eingehalten werden müssen.

In einer weiteren Ausgestaltung der Erfindung werden mehrere Bauteile/Hülsen in linienförmiger Anordnung relativ zur Formschiene bewegt. Durch die stehende Anordnung der Hülsen in Linienform wird vorteilhafterweise eine große Bauteildichte erreicht, so daß eine große Stückzahl zu biegender Hülsen pro Zeiteinheit mit diesem Verfahren gebogen werden können. Dadurch wird auch die Wirtschaftlichkeit des Verfahrens zur Herstellung großer Stückzahlen erhöht.

Vorteilhafterweise ist in einem Anfangs- und einem Endbereich der Formschiene ein unterschiedliches Profil der Formschiene vorgesehen, wodurch die zu biegenden Bauteile in unterschiedliche Form gebogen werden können. So kann das Profil der Anlagefläche im Anfangsbereich der Schiene eine Gerade sein, während es im Endbereich der Schiene als Kreisbogensegmet ausgeführt ist.

Die Veränderung des Profils der Formschiene kann einerseits in Stufen erfolgen. Vorteilhafterweise wird jedoch das Profil kontinuierlich verändert, so daß die beispielsweise gerade Anlagefläche im Anfangsbereich der Schiene allmählich und gleichmäßig in eine beispielsweise gebogene Anlagefläche im Endbereich der Formschiene verändert wird. Die Geschwindigkeit der Relativbewegung einer Hülse zur Formschiene ist dabei selbstverständlich der Längenerstreckung der Formschiene angepaßt. Dadurch wird eine vorteilhafterweise permanente Anlage der Hülse an der Formschiene, sowie eine definierte Wärmezufuhr von der Schiene zur Hülse gewährleistet.

Das Bauteil ist Polycarbonat, Polypropylen, Styrolacrylnitril, oder einem ähnlichen Kunststoff. Damit ist vorteilhafterweise ein besonders zäher Kunststoff mit geringer Neigung zu Sprödbruch und auch gleichzeitig gegebener Beständigkeit gegenüber Chemikalien angegeben. Außerdem liegt bei diesen Kunststoffen die Erweichungstemperatur unterhalb der Schrumpftemperatur.

In einer besonders vorteilhaften Ausbildung ist das zu biegende Bauteil, nämlich die Hülse, aus SAN (Styrolacrylnitril) hergestellt. Dieses Material zeigt die besten Eigenschaften, bezüglich Haltbarkeit, Geschmacksneutralität, Farbbeständigkeit, etc., bei Verwendung eines solchen Bauteils in einem Zahnreinigungsgerät.

Zum Biegen einer Hülse nach einem vorgenannten Verfahren, bzw. in einer vorgenannten Vorrichtung, wird das Bauteil auf eine Temperatur von 90° bis 120°C, insbesondere auf 102 bis 106°C erwärmt. Dadurch wird vorteilhafterweise ein gutes Biegeergebnis mit einer geringen Ausschußrate der zu biegenden Bauteile erreicht.

Besonders vorteilhaft wird ein Bauteil nach einem oben genannten Verfahren, bzw. in einer oben genannten Vorrichtung hergestellt, wenn das Bauteil während des Biegevorgangs eine Mindestfeuchte nicht unterschreitet. So sollte der Feuchtegehalt des Bauteils mindestens 0,02 Gew.%, insbesondere 0,08 Gew.% betragen, so daß vorteilhafterweise best-, bzw. schnellstmöglicher Wärmetransport in dem Bauteil erzielt wird.

In einer weiteren Ausgestaltung der Erfindung, welche auch eine selbständige Erfindung darstellen kann, wird eine Vorrichtung gemäß Anspruch 22 zur Durchführung des oben beschriebenen Verfahrens vorgeschlagen. Dabei sind eine Heizeinrichtung, ein Halte- und Transportmittel und wenigstens zwei relativ zueinander bewegbaren Werkzeuge, insbesondere eine Formschiene und ein Biegewerkzeug, vorgesehen. Ein zu biegendes Bauteil wird zwischen der Formschiene und dem Biegewerkzeug angeordnet. Durch die Ausbildung von nur einem Formteil, insbesondere einer Formschiene werden vorteilhafterweise Toleranzprobleme, wie sie bei anderen Biegevorrichtungen auftreten, vermieden. Die Form zum Biegen eines Bauteils, beispielsweise einer Hülse, wird nur durch die Profilierung der Formschiene bestimmt. Es versteht sich von selbst, daß sowohl das Biegewerkzeug relativ zur Formschiene, als auch umgekehrt, die Formschiene zum Biegewerkzeug beweglich vorgesehen sein kann. Durch diese Relativbewegung wird jederzeit eine optimale Anlage der zu biegenden Hülse an die Formschiene ermöglicht.

In einer besonderen Ausgestaltung der Erfindung wird vorgeschlagen, das Haltemittel als ein Haltedorn, eine Hülse, eine Spannzange oder ähnliches auszubilden. Damit wird vorteilhaft eine einfache und sichere Aufnahme, bzw. Halterung der Hülse angegeben.

Da das Haltemittel an einem geraden Schaft des Bauteils angreift, welcher auch durch den Biegevorgang nicht verformt wird, ist ein sicheres und definiertes Halten des Bauteils vorgeschlagen.

Das Transportmittel zur Aufnahme der oben beschriebenen Halterung ist als Ketten- oder Bandförderer o.ä. ausgebildet. Damit wird eine einfache, sichere und preiswerte Ausführung eines Transportmittels angegeben, welches auch flexibel ist für die unterschiedlichen Ausbildungsformen des Transportweges, so kann ein solcher Ketten-/Bandförderer vorteilhafterweise die zu bewegenden Bauteile sowohl in einer geraden, als auch auf einer Kurven-Bahn befördern.

In einer besonders vorteilhaften Ausgestaltung der Erfindung sind die Werkzeuge beheizbar. So ist die Formschiene aus einem wärmeleitfähigen Metall mit einem Kanal zur Führung eines Heizmediums ausgerüstet. Auch das Biegewerkzeug kann selbstverständlich direkt, bzw. indirekt beheizt sein, damit eine gleichmäßige und ausreichende Erwärmung des Bauteils ermöglicht wird. Ein weiterer Vorteil der beheizten Werkzeuge ist die geringere Empfindlichkeit des Bauteils gegen Biegefehler und somit auch eine geringere Ausschußquote in der Produktion.

In einer weiteren vorteilhaften Ausgestaltung der Erfindung wird das Biegewerkzeug im wesentlichen parallel zur Formschiene mit dem Bauteil mitbewegt. Dadurch wird eine optimale Anlage des Biegewerkzeugs an der zu biegenden Hülse erreicht; wobei selbstverständlich die Bewegungen des Biegewerkzeugs und des Halte- und Transportmittels synchronisierbar sind.

Für eine besondere Ausgestaltung der Erfindung weist die Formschiene eine Anlagefläche für das zu biegende Bauteil auf, welche sich im wesentlichen über die gesamte Länge der Formschiene erstreckt. Somit ist eine gleichzeitige Anlage, bzw. ein gleichzeitiger Biegevorgang von einer Vielzahl von Hülsen an einer Formschiene ermöglicht, wodurch eine hohe Wirtschaftlichkeit der Vorrichtung erreicht wird. Weiterhin ist mit Vorteil eine gleichmäßige kontinuierliche Erwärmung des Bauteils über die gesamte Länge der Formschiene gewährleistet.

Besonders vorteilhaft ist die Anlagefläche der Formschiene mit einer reibungsarmen Oberfläche ausgestattet. Durch eine beispielsweise geschliffene oder polierte und gehärtete Oberfläche einer metallischen Formschiene wird zum einen eine vorteilhafte gute Anlage des Bauteils an der Formschiene erreicht. Zum anderen gleitet das zu verformende Bauteil nahezu reibungsfrei über die Anlagefläche der Formschiene, ohne die Oberfläche des zu verformenden Bauteils zu beeinträchtigen, insbesondere nachteilig zu verändern.

Die Anlagefläche der Formschiene weist insbesondere im Querschnitt gesehen, wenigstens zwei Bereiche zur Führung des zu verformenden Bauteils auf, welche an die Außenform des Bauteils angepaßt sind. Ist das zu verformende Bauteil beispielsweise mit zwei kegelstumpfartigen Anlageflächen versehen, deren Spitzen aufeinanderzu zeigen, so sind die Schrägen dieser beiden Anlageflächen auch an der Anlagefläche der Formschiene abgebildet. Dadurch wird vorteilhafterweise eine exakte Führung des zu biegenden Bauteils an der Anlagefläche der Schiene erreicht. Die Formschiene ist, insbesondere in einem Anfangsund einem Endbereich mit unterschiedlichen Profilen versehen. Diese entsprechen der Form des zu biegenden Bauteils vor dem Biegevorgang und der Endform des gebogenenen Bauteils. Somit lassen sich vorteilhafterweise die verschiedenartigsten Profile der Schiene abbilden.

In einer besonders vorteilhaften Ausbildungsform der Formschiene, weist das Profil der Schiene im Bereich der Anlagefläche eine gerade und eine bogenförmige, insbesondere eine viertelkreisbogenförmige Anlagefläche auf. Durch die Ausbildung der geraden Anlagefläche, bevorzugt im Anfangsbereich der Schiene, wird die Aufnahme eines vor dem Biegevorgang geraden hülsenförmigen Bauteils ermöglicht. Dieses verläßt die Formschiene in ihrem Endbereich mit einem um 90° gebogenen mittleren Bereich.

Durch eine kontinuierliche Profiländerung vom Anfangs- zum Endbereich der Formschiene wird ein gleichmäßiger Biegevorgang der Hülse erreicht, welcher eine permanente Berührung zwischen der Schiene und der Hülse garantiert.

In einer Ausbildungsform der Erfindung ist die Formschiene als gerade Schiene ausgebildet. Damit ist vorteilhaft eine einfache und kostengünstige Ausbildung der Schiene, sowie auch der parallel zur Schiene vorgesehenen Transport- und Biegevorrichtung ermöglicht. Weiterhin kann durch eine gerade Ausbildung der Schiene eine Einbindung dieser Biegevorrichtung in eine linienförmige Anlage zur Herstellung, beispielsweise von gebogenen Hülsen, ermöglicht werden. Die Hülsen werden so von einer ersten Einrichtung über die gerade Schiene zu einer zweiten weiterbehandelnden Einrichtung transportiert.

In einer besonderen Ausbildungsform der Erfindung, und alternativ zu der oben beschriebenen geraden Schiene, ist die Schiene bogenförmig, insbesondere als Kreis- oder Kreissegmentbogen ausgebildet. Dadurch ist eine vorteilhafte raumsparende Anordnung der Biegevorrichtung angegeben. Die Biegeschiene kann dabei als geschlossener Kreis- oder auch als Kreisegment-Bogen zwischen zwei angebundenen weiteren Anlagenbauteilen angeordnet sein.

Besonders vorteilhaft wird eine Heizeinrichtung zur Erzeugung von Warmluft eingesetzt. Dies ist eine einfache und preisgünstige Lösung zur gleichmäßigen Beheizung der umzuformenden Bauteile. In einer besonderen Ausbildungsform weist die Heizeinrichtung Heizdüsen auf, welche auf den umzuformenden Bereich des Bauteils ausrichtbar sind. Durch eine konstruktiv besondere Ausbildung der Heizdüsen kann bei entsprechender Ausrichtung dieser Düsen ausschließlich der Bereich des Bauteils erwärmt werden, welcher auch für den Biegevorgang auf Erweichungstemperatur erwärmt werden muß. Die an den umzuformenden Bereich angrenzenden Bereiche, welche beispielsweise die geometrische Form, welche sie vor dem Biegevorgang, bzw. vor dem Erwärmungsvorgang aufweisen, auch nach dem Biegevorgang noch aufzeigen müssen.

Das Biegewerkzeug selbst mit einer Führungsrolle versehen, welche an dem, dem unteren Schaft gegenüberliegenden Ende des Bauteils ansetzbar ist. Durch die bewegliche Führungsrolle des Werkzeugs wird vorteilhafterweise eine reibungsarme seitliche Führung und ein Biegen des Bauteils ermöglicht. Dabei kann die Führungsrolle eine umlaufende Nut aufweisen, welche an die Außenkontur des zu biegenden Bauteils angepaßt ist und ein seitliches Verdrehen des Bauteils während des Biegevorgangs vermeidet. Dadurch, daß diese Führungsrolle an dem freien Ende des zu biegenden Bauteils ansetzbar ist, wird der größtmögliche Biegeradius, und die geringstnötige Biegekraft aufgebracht.

Das Biegewerkzeug führt eine geradlinige oder eine bogenförmige Bewegung aus, welche in eine Ebene senkrecht zur Formschiene, bzw. zur Längsachse der Formschiene liegt. In Abhängigkeit von der herzustellenden Form des Bauteils, wird die jeweils vorteilhafteste Bewegungsform angewendet. Durch die senkrechte Anordnung der Bewegungsebene des Werkzeugs zur Formschiene befindet sich das Biegewerkzeug vorteilhafterweise zu jedem Zeitpunkt des Biegevorgangs in einer definierten Position zur Formschiene.

In einer besonderen Ausbildungsform ist das Biegewerkzeug dem zu verformenden Bauteil kontinuierlich nachführbar. Dadurch wird ein vorteilhafterweise gleichmäßiger Biegevorgang ermöglicht, welcher das Bauteil zu jedem Zeitpunkt in eine definierte Anlage zu der Formschiene bringt.

In einer weiteren Ausgestaltung der Erfindung sind am Anfang und/oder am Ende der Formschiene Magazine zur Aufnahme der zu biegenden bzw. der gebogenen Bauteile vorgesehen. Dadurch kann vorteilhafterweise die Vorrichtung problemlos bestückt oder auch entladen werden, wobei die Bauteile kontinuierlich über die Formschiene bewegt und dabei gebogen werden.

Am Anfang und am Ende der Formschiene können auch eine Be- und Entladestation vorgesehen werden. Dadurch ist vorteilhafterweise eine automatische Beschickung und Entnahme der Biegevorrichtung vorgeschlagen, wodurch die Vorrichtung automatisiert und somit besonders wirtschaftlich ausführbar ist.

Weitere Merkmale, Vorteile und Anwendungsmöglichkeiten der Erfindung ergeben sich aus der nachfolgenden Beschreibung von Ausführungsbeispielen, die in den Zeichnungen näher dargestellt sind.

Es zeigen:
- Fig. 1: eine schematische Darstellung einer erfindungsgemäßen Vorrichtung mit einer Heizeinrichtung, einem Halte- und Transportmittel mit einer gebogenen Hülse, einer Formschiene und einem Biegewerkzeug im Schnitt,
- Fig. 2: eine Hülse in Anlage an einer Formschiene vor Beginn des Biegevorgangs und in 30° Biegeschritten während des Biegeverfahrens in Schnittdarstellung,
- Fig. 3: eine Reihe zu biegender Hülsen in linienförmiger Anordnung auf einem Halteund Transportmittel in Seitenansicht, ähnlich der Ansicht A in Fig. 1 und
- Fig. 4: eine schematische Darstellung einer Vorrichtung ähnlich der in Fig. 1, jedoch mit zwei zueinander stationären Biegewerkzeugen im Schnitt.

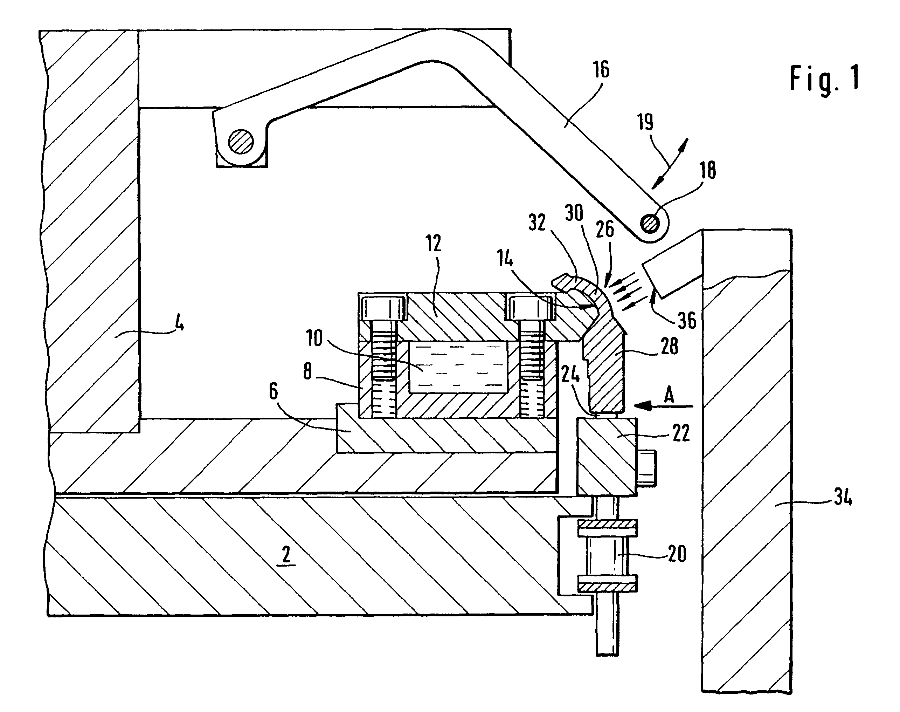

Eine erfindungsgemäße Vorrichtung (Fig. 1) besteht aus einer Grundplatte 2 und einem beweglichen Rahmen 4, in den ein Träger 6 eingelassen ist. Auf dem Träger 6 ist eine U-Schiene 8 angeordnet, welche einen Hohlraum aufweist, in dem ein Kanal 10 zur Führung eines Wärmeübertragungsmediums, beispielsweise Öl oder Wasser vorgesehen ist. Diese U-Schiene 8 ist an ihrer Oberseite mit einer Formschiene 12 abgedeckt, wobei beide Teile 8 und 12 dichtend miteinander verbunden ist. Vorteilhafterweise sind die U-Schiene 8 und die Formschiene 12 aus einem gut wärmeleitfähigen Werkstoff, so daß auch die an einer Stirnseite der Formschiene 12 befindlichen Anlagefläche 14 ausreichend temperiert wird. Die Anlagefläche 14 ist die erfindungswesentliche Fläche der Formschiene 12, welche die Form des zu biegenden Bauteils vorgibt.

An dem Rahmen 4 ist weiterhin ein Biegewerkzeug 16 schwenkbar angebracht, welches an seinem freien Ende eine Führungsrolle 18 trägt und in Bewegungsrichtung 19 auf einer Geraden verstellt oder auf einem Kreisbogen geschwenkt werden kann. Die Führungsrolle 18 ist dabei so profiliert, daß sie mit ihrer Anlagefläche an die Außenkontur eines zu biegenden Bauteils 26 angepaßt ist. Die Biegerolle 18 ist mit einem Hohlschliff zur Führung der Hülse versehen, so daß beim Gleiten des umzuformenden Bereichs 30 der Hülse 26 ein Verdrehen der Hülse an der Anlagefläche 14 durch Reibungseinfluß verhindert wird.

An der Grundplatte 2 der Vorrichtung ist außerdem eine Rollenkette 20 geführt, welche als Transportmittel parallel zur Schiene 12 verläuft. Mit der Kette 20 ist ein Haltemittel 22 verbunden, welches einen Dorn zur Aufnahme des zu biegenden Bauteils 26 trägt. Das zu biegende Bauteil kann beispielsweise ein im wesentlichen rotationssymmetrischer hülsenförmiger Körper sein, welcher aus einem unteren Schaft 28, einem mittleren umzuformenden Bereich 30 und einem kegelförmigen Kopf 32 besteht. Das zu biegende Bauteil 26 ist mit dem Haltemittel 22 und der Kette 20 so verbunden, daß diese Baugruppe parallel zur Längserstreckung der Formschiene, d.h. in Richtung der Bildebene hinein oder aus der Bildebene heraus, bewegbar angeordnet sind. Das Biegewerkzeug 16 kann mit dem Bauteil 26 parallel zur Formschiene 12 mitbewegt werden. Das hülsenförmige Bauteil 26, im nachfolgenden auch Hülse genannt, ist mit der Halteund Transportvorrichtung 20, 22 so verbunden, daß es mit einer Längsseite zumindest bereichsweise an der Anlagefläche 14 der Formschiene 12 anliegt und so durch den unmittelbaren Kontakt zu der beheizten Formschiene 12 erwärmt wird.

Auf der, der Anlagefläche 14 abgewandten Längsseite des Bauteils 26 ist eine Heizeinrichtung 34 vorgesehen. Diese ist mit einer Heizdüse 36 ausgerüstet, welche im wesentlichen auf den mittleren umzuformenden Bereich 30 des Bauteils 28 gerichtet ist und beispielsweise mit Heißluft betrieben wird.

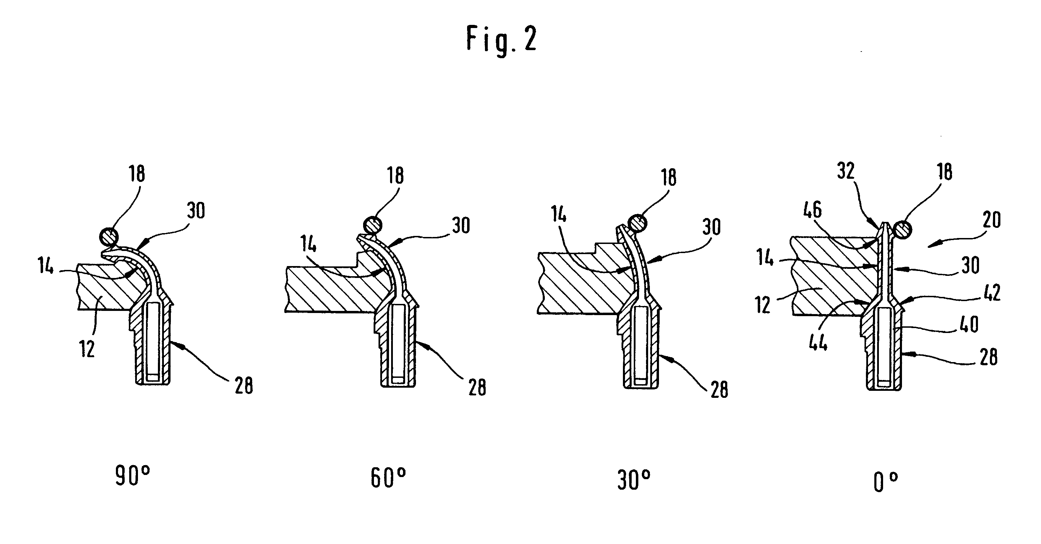

Um einen gleichmäßigen Biegevorgang des Bauteils 26 an der Formschiene 12 zu ermöglichen, ist die Schiene 12 in einem Anfangs- und einem Endbereich mit unterschiedlichem Profil der Anlagefläche 14 vorgesehen. Zur Herstellung eines gebogenen hülsenförmigen Bauteils ändert sich das Profil der Anlagefläche 14 der Formschiene 12 kontinuierlich. Aus diesem kontinuierlichen Biegeverfahren (Fig. 2) sind beispielhaft vier Schnitte aus der Längserstreckung der Schiene 12 gezeigt, welche das Bauteil 26 bei einem Biegewinkel von 0°, 30°, 60° sowie in seiner Endform mit 90° zeigen. Der gesamte Biegevorgang läßt sich selbstverständlich in nahezu unendlich vielen Momentaufnahmen darstellen, da sich das Profil der Anlagefläche 14 von einem Anfangsbereich zu einem Endbereich der Formschiene 12 kontinuierlich ändert.

Das zu biegende Bauteil 26 ist als im wesentlichen rotationssymmetrische Hülse mit einer durchgehenden, jedoch gestuften Bohrung 40 versehen. Der untere Schaft 28, bzw. der untere Teil der Bohrung 40 ist zur Aufnahme der Hülse 26 durch ein Halte- und Transportmittel vorgesehen, welches jedoch der besseren Übersichtlichkeit halber nicht gezeigt ist. An den unteren Schaft 28 schließt sich nach oben ein mittlerer umzuformender halsartiger Bereich 30 an, welcher durch eine kegelförmige Spitze 32 begrenzt ist. In den Übergangsbereichen zwischen dem Schaft 28 und dem mittleren Bereich 30 und zwischen dem mittleren Bereich 30 und der Spitze 32 sind jeweils kegelstumpfartige Anlageflächen 42 vorgesehen, wobei die Spitzen dieser Kegelstümpfe aufeinander zu zeigen. Diese Anlageflächen 42 werden unter anderem zur Positionierung der Hülse 26 an der Anlagefläche 14 verwendet. Dazu sind an der Schine 12 jeweils eine untere und eine obere Führungsfläche 44, 46 angebracht, welche der geometrischen Ausbildung der Anlagefläche 42 der Hülse 26 entspricht. Dadurch ist eine optimale Positionierung der Hülse 26 an der Formschiene 12 ermöglicht und ein axiales Verschieben der Hülse 26 während des Biegeverfahrens ausgeschlossen.

Die Führungsrolle 18, das dazugehörige Biegewerkzeug 16 ist der besseren Übersichtlikkeit halber ebenfalls nicht dargestellt, wird an die, der Anlagefläche 14 gegenüberliegende Kegelfläche des Bauteil-Kopfes 32 angelegt und entsprechend der Verformung der Hülse 26 dem Kopf 32 nachgeführt.

Mit fortschreitender Entfernung des Bauteils 26 von dem Anfangsbereich der Formschiene 12 - in dem zweiten Bild der Fig. 2 mit 30° gekennzeichnet - verändert sich das Profil der Anlagefläche 14 zunehmend von einer Geraden bis zu einem Viertelkreisbogen, wie er in dem vierten Bild der Fig. 2 mit 90° gekennzeichnet ist. Dabei ist entscheidend, daß die Hülse 26, insbesondere der umzuformende Bereich 30 permanent in linienförmiger Berührung mit der Anlagefläche 14 der Schiene 12 steht. Dadurch wird der erforderliche Wärmeübergang von der beheizten Schiene 12 zu dem Bauteil 30 gewährleistet. Zusätzlich wird der aus der Heizdüse 36 (gemäß Darstellung in Fig. 1) austretende Heißluftstrahl entsprechend dem Verformungsgrad der Hülse 26 in seiner Richtung angepaßt, so daß dieser jederzeit ausschließlich den zu verformenden Bereich 30 erwärmt.

In einem Ausführungsbeispiel eines erfindungsgemäßen Verfahrens wurde eine Zykluszeit von ca. 16 bis 20 Sekunden zum vollständigen Biegen eines hülsenförmigen Bauteils erreicht. Diese Zykluszeit ist dabei im wesentlichen abhängig von der für das Biegen erforderlichen Erwärmungszeit des Bauteils zwischen der Schiene und der Heizeinrichtung.

Die Führungsrolle 18 des Biegewerkzeugs 16 wird während des Biegevorgangs an der kegelförmigen Spitze 32 der Hülse 26 abgerollt. Dadurch ist ein reibungsarmes Biegen mit einem erforderlichen Anpreßdruck der Rolle 18 an dem Kopf 32 ermöglicht.

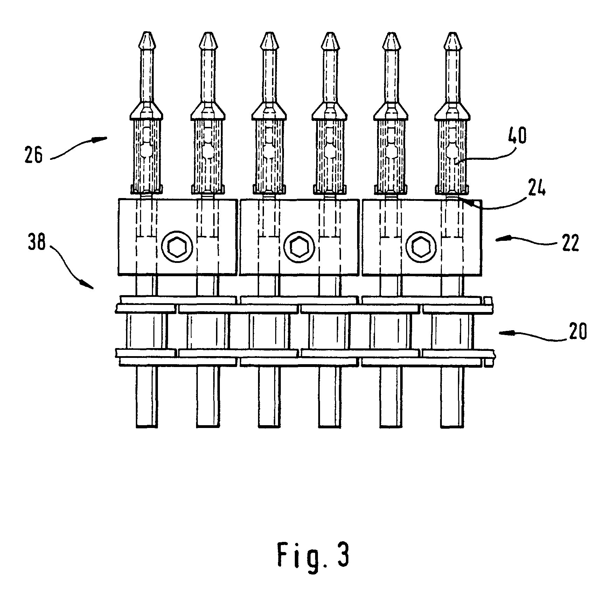

Die zu biegenden Hülsen 26 (Fig. 3) sind dicht nebeneinander und parallel zueinander mit dem Halte- und Transportmittel 38 verbunden. Durch diese hohe Bauteildichte wird ein kontinuierliches und äußerst wirtschaftliches Biegeverfahren ermöglicht. Durch die Ausbildung des Halte- und Transportmittels 38 als Rollenkette 20 mit segmentartig befestigten Haltemitteln 22 ist diese Baugruppe äußerst flexibel und kann jeder erdenklichen Ausbildungsform einer Formschiene problemlos angepaßt werden, gleich ob die Formschiene als eine gerade, eine gebogene oder auch kreisbogenförmige Schiene ausgebildet ist.

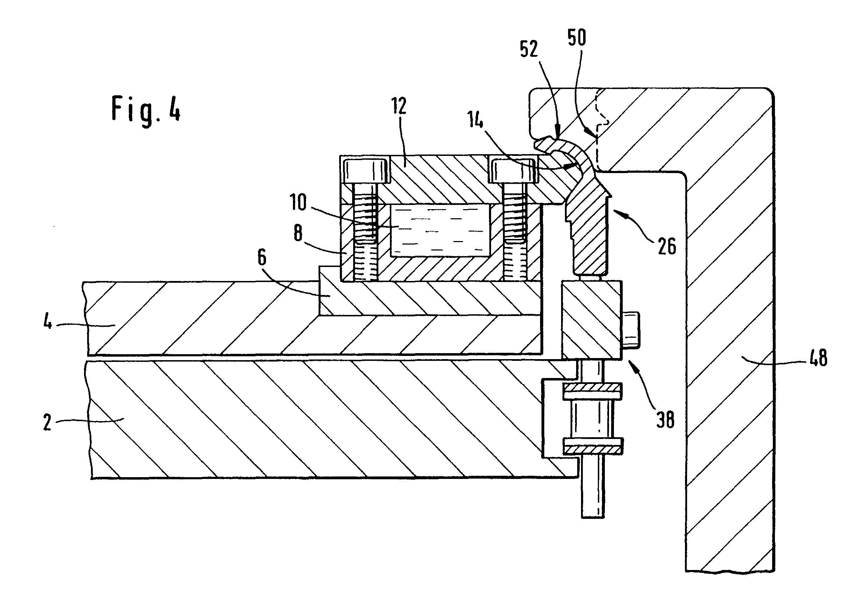

Eine alternative Ausführungsform (Fig. 4) zu der in Fig. 1 gezeigten Vorrichtung mit einem beweglichen Biegewerkzeug 16 besteht in der Anordnung eines zweiten stationären Biegewerkzeugs 48, wobei die Hülse 26 in einem kanalartigen Zwischenraum geführt wird, welcher zwischen der Anlagefläche 14, der Formschiene 12 und einer Anlagefläche 52 des zweiten Biegewerkzeugs 48 gebildet wird. Die Anlagefläche des zweiten Biegewerkzeugs 48 ist dabei selbstverständlich auch in Abhängigkeit der Ausbildung des Profils der Anlagefläche 14 der Schiene 12 verändert. So zeigt das zweite Biegewerkzeug in einem Anfangsbereich eine gerade Anlagefläche 50, welche sich bis zum Endbereich des Werkzeugs 48 zu einer gebogenen Anlagefläche 52 verändert.

## Patentansprüche

1. Verfahren zum Biegen eines Bauteils aus einem thermoplastischen Kunststoff durch Erwärmung des Bauteils bis zur Erweichungstemperatur des Kunststoffs, **dadurch gekennzeichnet, daß** man das Bauteil (26) an einer Formschiene (12) zur Anlage bringt und während einer Relativbewegung zwischen dem Bauteil (26) und der Formschiene (12) das Bauteil (26) mittels eines Biegewerkzeuges (16) an der Formschiene (12) biegt, wobei sich die Anlagefläche zwischen dem Bauteil (26) und der Formschiene (12) ändert.

2. Verfahren nach Anspruch 1, **dadurch gekennzeichnet, daß** man das zu biegende Bauteil (26) im wesentlichen senkrecht zur Formschiene (12) anordnet.

3. Verfahren nach Anspruch 1 oder 2, **dadurch gekennzeichnet, daß** man das Bauteil (26) in eine linienförmige Anlage an der Formschiene (12) bringt.

4. Verfahren nach Anspruch 1,2 oder 3, **dadurch gekennzeichnet, daß** man das Bauteil (26) mittels eines Halte- und Transportmittels (38) im wesentlichen parallel zur Formschiene (12) bewegt.

5. Verfahren nach einem der vorhergehenden Ansprüche, **dadurch gekennzeichnet, daß** man das Bauteil (26) mit im wesentlichen konstanter Geschwindigkeit relativ zur Formschiene (12) bewegt.

6. Verfahren nach einem der vorhergehenden Ansprüche, **dadurch gekennzeichnet, daß** man die Position des Biegewerkzeugs (16) zur Führungsschiene (12) ändert.

7. Verfahren nach einem der vorhergehenden Ansprüche, **dadurch gekennzeichnet, daß** man das Biegewerkzeug (16) relativ zur Schiene (12) mit dem Bauteil (26) mitbewegt.

8. Verfahren nach einem der vorhergehenden Ansprüche, **dadurch gekennzeichnet, daß** man das Biegewerkzeug (16) in einer Ebene bewegt, welche im wesentlichen senkrecht zur Schienenlängsachse angeordnet ist.

9. Verfahren nach Anspruch 8, **dadurch gekennzeichnet, daß** das Biegewerkzeug (16) eine gerade oder eine kreisbogenförmige Bewegung (19) ausführt.

10. Verfahren nach einem der vorhergehenden Ansprüche, **dadurch gekennzeichnet, daß** man die Bewegung des Werkzeugs (16) kontinuierlich ausführt.

11. Verfahren nach einem der vorhergehenden Ansprüche, **dadurch gekennzeichnet, daß** man das Bauteil (26) an einer stationären Heizeinrichtung (34) vorbeibewegt.

12. Verfahren nach einem der Ansprüche 1 bis 10, **dadurch gekennzeichnet, daß** man eine Heizeinrichtung (34) relativ zur Schiene (12) mit dem Bauteil (26) mitbewegt.

13. Verfahren nach einem der vorhergehenden Ansprüche, **dadurch gekennzeichnet, daß** man das Bauteil (26) nur partiell, insbesondere an der Biegestelle, erwärmt.

14. Verfahren nach einem der vorhergehenden Ansprüche, **dadurch gekennzeichnet, daß** man mehrere Bauteile (26) in linienförmiger Anordnung relativ zur Formschiene (12) bewegt.

15. Verfahren nach einem der vorhergehenden Ansprüche, **dadurch gekennzeichnet, daß** man in einem Anfangs- und einem Endbereich der Formschiene (12) ein unterschiedliches Profil vorsieht.

16. Verfahren nach Anspruch 15, **dadurch gekennzeichnet, daß** man das Profil kontinuierlich verändert.

17. Verfahren nach einem der vorhergehenden Ansprüche, **dadurch gekennzeichnet, daß** das Bauteil (26) aus PC, PP, SAN oder einem ähnlichen Kunststoff besteht.

18. Verfahren nach einem der vorhergehenden Ansprüche, **dadurch gekennzeichnet, daß** das Bauteil (26) aus SAN (Styrol-Acryl-Nitril) besteht.

19. Verfahren nach einem der vorhergehenden Ansprüche, **dadurch gekennzeichnet, daß** man das Bauteil (26) zum Biegen auf eine Temperatur von 90 bis 120°C, insbesondere 102 bis 106°C erwärmt.

20. Verfahren nach einem der vorhergehenden Ansprüche, **dadurch gekennzeichnet, daß** das Bauteil (26) während des Biegens eine Mindestfeuchte von 0,02 Gewichtsprozent, bevorzugt 0,08 Gewichtsprozent aufweist.

21. Verfahren nach einem der vorhergehenden Ansprüche, **dadurch gekennzeichnet, daß** das Bauteil (26) als hülsenförmiges Bauteil für ein Gerät des persönlichen Bedarfs ausgebildet ist.

22. Vorrichtung zur Durchführung des Verfahrens nach einem der vorhergehenden Ansprüche, **dadurch gekennzeichnet, daß** eine Heizeinrichtung (34), ein Halte- und Transportmittel (38) und wenigstens zwei relativ zueinander bewegbare Werkzeuge, die als Formschiene (12) und als Biegewerkzeug (16) ausgebildet sind, vorgesehen sind und ein zu biegendes Bauteil (26) zwischen der Formschiene (12) und dem Biegewerkzeug (16) angeordnet ist.

23. Vorrichtung nach Anspruch 22, **dadurch gekennzeichnet, daß** das Haltemittel (22) als Dorn (24), Hülse, Spannzange, o.ä. ausgebildet ist.

24. Vorrichtung nach Anspruch 22 oder 23, **dadurch gekennzeichnet, daß** das Haltemittel (22) an einem geraden Schaft (28) des Bauteils (26) angreift.

25. Vorrichtung nach einem der Ansprüche 22 bis 24, **dadurch gekenzeichnet,** daß das Transportmittel als ein Ketten-, Bandförderer, o.ä. ausgebildet ist.

26. Vorrichtung nach einem der Ansprüche 22 bis 25, **dadurch gekennzeichnet, daß** die Werkzeuge (12, 16, 48) beheizbar sind.

27. Vorrichtung nach einem der Ansprüche 22 bis 26, **dadurch gekennzeichnet, daß** das Biegewerkzeug (16) im wesentlichen parallel zur Schiene (12) mit dem Bauteil (26) mitbewegbar ist.

28. Vorrichtung nach einem der Ansprüche 22 bis 27, **dadurch gekennzeichnet, daß** die Formschiene (12) eine Anlagefläche (14) für das Bauteil (26) aufweist, welche sich im wesentlichen über die gesamte Länge der Formschiene (12) erstreckt.

29. Vorrichtung nach einem der Ansprüche 22 bis 28, **dadurch gekennzeichnet, daß** die Anlagefläche (14) eine reibungsarme Oberfläche aufweist.

30. Vorrichtung nach einem der Ansprüche 22 bis 29, **dadurch gekennzeichnet, daß** die Anlagefläche (14) im Querschnitt wenigstens zwei Bereiche (44,46) zur Führung des Bauteils (26) aufweist, welche an die Außenform des Bauteils (26) angepaßt sind.

31. Vorrichtung nach einem der Ansprüche 22 bis 30, **dadurch gekennzeichnet, daß** die Formschiene (12), insbesondere in einem Anfangs- und einem Endbereich unterschiedliche Profile aufweist.

32. Vorrichtung nach einem der Ansprüche 22 bis 31, **dadurch gekennzeichnet, daß** das Profil der Formschiene (12) im Bereich der Anlagefläche (14) eine gerade und eine bogenförmige, insbesondere eine viertelkreisbogenförmige Anlagefläche (14) aufweist.

33. Vorrichtung nach Anspruch 32, **dadurch gekennzeichnet, daß** die Profiländerung vom Anfangs- zum Endbereich der Formschiene (12) kontinuierlich erfolgt.

34. Vorrichtung nach einem der Ansprüche 22 bis 33, **dadurch gekennzeichnet, daß** die Formschiene (12) als gerade Schiene ausgebildet ist.

35. Vorrichtung nach einem der Ansprüche 22 bis 33, **dadurch gekennzeichnet, daß** die Formschiene (12) bogenförmig, insbesondere als Kreis- oder Kreissegmentbogen ausgebildet ist.

36. Vorrichtung nach einem der Ansprüche 22 bis 35, **dadurch gekennzeichnet, daß** die Heizeinrichtung (34) Warmluft erzeugt.

37. Vorrichtung nach Anspruch 36, **dadurch gekennzeichnet, daß** die Heizeinrichtung (34) Heizdüsen (36) aufweist, welche auf den umzuformenden Bereich (30) des Bauteils (26) ausrichtbar sind.

38. Vorrichtung nach einem der Ansprüche 22 bis 37, **dadurch gekennzeichnet, daß** das Biegewerkzeug (16) mit einer Führungsrolle (18) versehen ist, welche an dem, dem Schaft (28) gegenüberliegenden Ende des Bauteils (26) ansetzbar ist.

39. Vorrichtung nach einem der Ansprüche 22 bis 38, **dadurch gekennzeichnet, daß** das Biegewerkzeug (16) eine geradlinige oder eine bogenförmige Bewegung (19) ausführt, welche in einer Ebene senkrecht zur Formschiene (12) liegt.

40. Vorrichtung nach Anspruch 39, **dadurch gekennzeichnet, daß** das Biegewerkzeug (16) dem Bauteil (26) kontinuierlich nachführbar ist.

41. Vorrichtung nach einem der Ansprüche 22 bis 40, **dadurch gekennzeichnet, daß** am Anfang und/oder am Ende der Formschiene (12) Magazine zur Aufnahme der Bauteile (26) vorgesehen sind.

42. Vorrichtung nach einem der Ansprüche 22 bis 41, **dadurch gekennzeichnet, daß** eine Be- und Entladestation vorgesehen ist.

## Claims

1. A method for bending a component made of a thermoplastic material by heating the component up to the plastic's softening point, **characterized in that** it involves the steps of bringing the component (26) into engagement with a forming rail (12) and, during a relative movement of the component (26) and the forming rail (12), bending the component (26) against the forming rail (12) by means of a bending tool (16), with the engagement surface between the component (26) and the forming rail (12) varying.

2. The method as claimed in claim 1, **characterized in that** it involves the step of arranging the component (26) to be bent essentially vertically to the forming rail (12).

3. The method as claimed in claim 1 or 2, **characterized in that** it involves the step of bringing the component (26) into linear engagement with the forming rail (12).

4. The method as claimed in claim 1, 2 or 3, **characterized in that** it involves the step of moving the component (26) by a holding and feeding device (38) essentially parallel to the forming rail (12).

5. The method as claimed in any one of the preceding claims, **characterized in that** it involves the step of moving the component (26) at an essentially constant speed relative to the forming rail (12).

6. The method as claimed in any one of the preceding claims, **characterized in that** it involves the step of altering the position of the bending tool (16) relative to the guide rail (12).

7. The method as claimed in any one of the preceding claims, **characterized in that** it involves the step of moving the bending tool (16) as well as the component (26) relative to the rail (12).

8. The method as claimed in any one of the preceding claims, **characterized in that** it involves the step of moving the bending tool (16) in a plane arranged essentially vertically to the longitudinal axis of the rail.

9. The method as claimed in claim 8, **characterized in that** it involves the step of causing the bending tool (16) to perform a straight movement or a movement on the arc of a circle (19).

10. The method as claimed in any one of the preceding claims, **characterized in that** it involves the step of causing the tool (16) to perform a continuous movement.

11. The method as claimed in any one of the preceding claims, **characterized in that** it involves the step of moving the component (26) past a stationary heating unit (34).

12. The method as claimed in any one of the claims 1 to 10, **characterized in that** it involves the step of moving a heating unit (34) as well as the component (26) relative to the rail (12).

13. The method as claimed in any one of the preceding claims, **characterized in that** it involves the step of heating the component (26) only partially, in particular in the bend area.

14. The method as claimed in any one of the preceding claims, **characterized in that** it involves the step of moving several components (26) in a linear arrangement relative to the forming rail (12).

15. The method as claimed in any one of the preceding claims, **characterized in that it** involves the step of providing the forming rail (12) with a different profile in a section at the beginning and at the end thereof.

16. The method as claimed in claim 15, **characterized in that** it involves the step of varying the profile continuously.

17. The method as claimed in any one of the preceding claims, **characterized in that** the component (26) is made of PC, PP, SAN, or a similar plastic material.

18. The method as claimed in any one of the preceding claims, **characterized in that** the component (26) is made of SAN (styrene acrylonitrile).

19. The method as claimed in any one of the preceding claims, **characterized in that** the step of bending involves heating the component (26) to a temperature of 90°C to 120°C, particularly to between 102°C and 106°C.

20. The method as claimed in any one of the preceding claims, **characterized in that** the minimum moisture content of the component (26) during bending amounts to 0.02 % by weight, preferably 0.08 % by weight.

21. The method as claimed in any one of the preceding claims, **characterized in that** the component (26) is constructed as a sleeve-shaped component for a personal care appliance.

22. A device for implementing the method as claimed in any one of the preceding claims, **characterized in that** provision is made for a heating unit (34), a holding and feeding device (38), and at least two tools movable relative to each other which are constructed as a forming rail (12) and as a bending tool (16), and that a component (26) to be bent is positioned between the forming rail (12) and the bending tool (16).

23. The device as claimed in claim 22, **characterized in that** the holding device (22) is configured in the form of a mandrel (24), a bushing, a collet chuck or the like.

24. The device as claimed in claim 22 or 23, **characterized in that** the holding device (22) engages on a straight shank (28) of the component (26).

25. The device as claimed in any one of the claims 22 to 24, **characterized in that** the feeding device is constructed as a chain or belt conveyor or the like.

26. The device as claimed in any one of the claims 22 to 25, **characterized in that** the tools (12, 16, 48) are heatable.

27. The device as claimed in any one of the claims 22 to 26, **characterized in that** the bending tool (16) is movable essentially parallel to the rail (12) with the component (26).

28. The device as claimed in any one of the claims 22 to 27, **characterized in that** the forming rail (12) has an engagement surface (14) for the component (26), said engagement surface extending essentially over the full length of the forming rail (12).

29. The device as claimed in any one of the claims 22 to 28, **characterized in that** the engagement surface (14) is equipped with a low-friction surface.

30. The device as claimed in any one of the claims 22 to 29, **characterized in that** in its cross section the engagement surface (14) has at least two sections (44, 46) conformed to the outer contour of the component (26) in order to guide the component (26).

31. The device as claimed in any one of the claims 22 to 30, **characterized in that** the forming rail (12) is equipped with different profiles, particularly in a section at the beginning and at the end thereof.

32. The device as claimed in any one of the claims 22 to 31, **characterized in that** the profile of the forming rail (12) in the area of the engagement surface (14) has a straight and an arcuate engagement surface (14), in particular an engagement surface curved in the manner of a quarter circle.

33. The device as claimed in claim 32, **characterized in that** the profile varies continuously from the section at the beginning to the section at the end of the forming rail (12).

34. The device as claimed in any one of the claims 22 to 33, **characterized in that** the forming rail (12) is constructed as a straight rail.

35. The device as claimed in any one of the claims 22 to 33, **characterized in that** the forming rail (12) is of an arcuate configuration, being in particular configured as an arc of a circle or of a circular segment.

36. The device as claimed in any one of the claims 22 to 35, **characterized in that** the heating unit (34) produces hot air.

37. The device as claimed in claim 36, **characterized in that** the heating unit (34) has heating nozzles (36) adapted to be directed at the section (30) to be formed of the component (26).

38. The device as claimed in any one of the claims 22 to 37, **characterized in that** the bending tool (16) is equipped with a guide roller (18) adapted to be placed against the end of the component (26) remote from the shank (28).

39. The device as claimed in any one of the claims 22 to 38, **characterized in that** the bending tool (16) performs a rectilinear or an arcuate movement (19) lying in a plane vertical to the forming rail (12).

40. The device as claimed in claim 39, **characterized in that** the bending tool (16) is continuously adjustable to the component (26).

41. The device as claimed in any one of the claims 22 to 40, **characterized in that** magazines are provided at the beginning and/or end of the forming rail (12) to receive the components (26).

42. The device as claimed in any one of the claims 22 to 41, **characterized in that** a loading and unloading station is provided.

## Revendications

1. Procédé de cintrage d'une pièce de construction en matière thermoplastique par chauffage de la pièce de construction jusqu'à la température de ramollissement du plastique, **caractérisé en ce que** l'on met la pièce de construction (26) en contact avec un rail de formage (12) et que, lors d'un mouvement relatif entre la pièce de construction (26) et le rail de formage (12), on cintre la pièce de construction (26) au moyen d'un outil de cintrage (16) sur le rail de formage (12), ce qui modifie la surface de contact entre la pièce de construction (26) et le rail de formage (12).

2. Procédé selon la revendication 1, **caractérisé en ce que** l'on dispose la pièce de construction à cintrer (26) globalement à la perpendiculaire du rail de formage (12).

3. Procédé selon la revendication 1 ou 2, **caractérisé en ce que** l'on met la pièce de construction (26) en contact linéaire avec le rail de formage (12).

4. Procédé selon la revendication 1, 2 ou 3, **caractérisé en ce que** l'on déplace la pièce de construction (26) grâce à un moyen de maintien et de transport (38) globalement en parallèle du rail de formage (12).

5. Procédé selon une des revendications précédentes, **caractérisé en ce que** l'on déplace la pièce de construction (26) à une vitesse globalement constante par rapport au rail de formage (12).

6. Procédé selon une des revendications précédentes, **caractérisé en ce que** l'on modifie la position de l'outil de cintrage (16) par rapport au rail de guidage (12).

7. Procédé selon une des revendications précédentes, **caractérisé en ce que** l'on déplace l'outil de cintrage (16) par rapport au rail (12) en même temps que la pièce de construction (26).

8. Procédé selon une des revendications précédentes, **caractérisé en ce que** l'on déplace l'outil de cintrage (16) dans un plan qui se situe globalement à la perpendiculaire de l'axe longitudinal du rail .

9. Procédé selon la revendication 8, **caractérisé en ce que** l'outil de cintrage (16) exécute un mouvement rectiligne ou en arc de cercle (19).

10. Procédé selon une des revendications précédentes, **caractérisé en ce que** l'on réalise le mouvement de l'outil (16) en continu.

11. Procédé selon une des revendications précédentes, **caractérisé en ce que** l'on fait passer la pièce de construction (26) devant un dispositif de chauffage stationnaire (34).

12. Procédé selon une des revendications 1 à 10, **caractérisé en ce que** l'on déplace un dispositif de chauffage (34) par rapport au rail (12) en même temps que la pièce de construction (26).

13. Procédé selon une des revendications précédentes, **caractérisé en ce que** l'on ne chauffe la pièce de construction (26) que partiellement, en particulier à l'emplacement du cintrage.

14. Procédé selon une des revendications précédentes, **caractérisé en ce que** l'on déplace plusieurs pièces de construction (26) disposées linéairement par rapport au rail de formage (12).

15. Procédé selon une des revendications précédentes, **caractérisé en ce que** l'on prévoit un profil différent à la zone de début et à la zone de bout du rail de formage (12).

16. Procédé selon la revendication 15, **caractérisé en ce que** l'on modifie le profil en continu.

17. Procédé selon une des revendications précédentes, **caractérisé en ce que** la pièce de construction (26) est fabriquée en PC, PP, SAN ou matière plastique similaire.

18. Procédé selon une des revendications précédentes, **caractérisé en ce que** la pièce de construction (26) est fabriquée en SAN (styrol-acrylique-nitrile).

19. Procédé selon une des revendications précédentes, **caractérisé en ce que** l'on chauffe la pièce de construction (26) pour le cintrage à une température de 90 à 120° C, en particulier de 102 à 106° C.

20. Procédé selon une des revendications précédentes, **caractérisé en ce que** la pièce de construction (26) présente, pendant le cintrage, une humidité minimale de 0,02 pour cent du poids, de préférence 0,08 pour cent du poids.

21. Procédé selon une des revendications précédentes, **caractérisé en ce que** la pièce de construction (26) est conçue en forme de douille pour un appareil d'usage personnel.

22. Dispositif pour la réalisation du procédé selon une des revendications précédentes, **caractérisé en ce qu'**un dispositif de chauffage (34), un moyen de maintien et de transport (38) et au moins deux outils mobiles l'un par rapport à l'autre, se présentant sous la forme d'un rail de formage (12) et d'un outil de cintrage (16), sont prévus et qu'une pièce de construction à cintrer (26) est disposée entre le rail de formage (12) et l'outil de cintrage (16).

23. Dispositif selon la revendication 22, **caractérisé en ce que** le moyen de maintien (22) se présente sous forme de mandrin (24), douille, pince de serrage ou similaire.

24. Dispositif selon la revendication 22 ou 23, **caractérisé en ce que** le moyen de maintien (22) est en prise sur un arbre droit (28) de la pièce de construction (26).

25. Dispositif selon une des revendications 22 à 24, **caractérisé en ce que** le moyen de transport se présente sous forme d'un convoyeur à chaîne, à bande ou similaire.

26. Dispositif selon une des revendications 22 à 25, **caractérisé en ce que** les outils (12, 16, 48) peuvent être chauffés.

27. Dispositif selon une des revendications 22 à 26, **caractérisé en ce que** l'outil de cintrage (16) peut se déplacer globalement de façon parallèle au rail (12) en même temps que la pièce de construction (26).

28. Dispositif selon une des revendications 22 à 27, **caractérisé en ce que** le rail de formage (12) présente une surface de contact (14) pour la pièce de construction (26) qui s'étend globalement sur toute la longueur du rail de formage (12).

29. Dispositif selon une des revendications 22 à 28, **caractérisé en ce que** la surface de contact (14) présente une surface à faible frottement.

30. Dispositif selon une des revendications 22 à 29, **caractérisé en ce que** la surface de contact (14) présente, en section transversale, au moins deux zones (44, 46) pour le guidage de la pièce de construction (26) qui sont adaptées à la forme extérieure de la pièce de construction (26).

31. Dispositif selon une des revendications 22 à 30, **caractérisé en ce que** le rail de formage (12), en particulier en zone de début et de bout, présente des profils différents.

32. Dispositif selon une des revendications 22 à 31, **caractérisé en ce que** le profil du rail de formage (12) présente, dans la zone de la surface de contact (14), une surface de contact (14) rectiligne et une en arc de cercle, particulièrement en quart de cercle.

33. Dispositif selon la revendication 32, **caractérisé en ce que** la modification de profil de la zone de début à la zone de bout du rail de formage (12) se fait en continu.

34. Dispositif selon une des revendications 22 à 33, **caractérisé en ce que** le rail de formage (12) se présente sous forme d'un rail rectiligne.

35. Dispositif selon une des revendications 22 à 33, **caractérisé en ce que** le rail de formage (12) se présente sous forme d'un rail en arc de cercle, particulièrement d'un cercle ou segment de cercle.

36. Dispositif selon une des revendications 22 à 35, **caractérisé en ce que** le dispositif de chauffage (34) produit de l'air chaud.

37. Dispositif selon la revendication 36, **caractérisé en ce que** le dispositif de chauffage (34) présente des buses de chauffage (36) qui peuvent être alignées sur la zone à façonner (30) de la pièce de construction (26).

38. Dispositif selon une des revendications 22 à 37, **caractérisé en ce que** l'outil de cintrage (16) est muni d'un rouleau de guidage (18) qui peut être installé à l'extrémité de la pièce de construction (26) faisant face à l'arbre (28).

39. Dispositif selon une des revendications 22 à 38, **caractérisé en ce que** l'outil de cintrage (16) exécute un mouvement en ligne droite ou en arc de cercle (19), qui a lieu dans un plan à la perpendiculaire du rail de formage (12).

40. Dispositif selon la revendication 39, **caractérisé en ce que** l'outil de cintrage (16) peut être rapproché en continu de la pièce de construction (26).

41. Dispositif selon une des revendications 22 à 40, **caractérisé en ce que**, au début et/ou au bout du rail de guidage (12), des compartiments pouvant recevoir les pièces de construction (26) sont prévus.

42. Dispositif selon une des revendications 22 à 41, **caractérisé en ce qu'**une station de chargement et de déchargement est prévue.
